# EUROPÄISCHE PATENTANMELDUNG

(11) **EP 1 174 464 A2**
(43) Veröffentlichungstag der Anmeldung: **23.01.2002**
(21) Anmeldenummer: 01110118.5
(22) Anmeldetag: 03.05.2001
(51) Int. Cl.: C08L 21/00

(54) **Gummiartikel mit niedriger Wärmeentwicklung**

(30) Priorität: 14.07.2000 DE 10034327
(71) Anmelder: Solutia Germany GmbH & Co. KG, 55252 Mainz-Kastel (DE)
(72) Erfinder: Wallenwein, Siegfried, 64572 Büttelborn (DE); Scholl, Frank, 62352 Bad Homburg (DE); Eckes, Helmut, Dr., 65817 Eppstein (DE)

(57) **Zusammenfassung**

Verfahren zur Verminderung der Wärmeentwicklung bei dynamischer Beanspruchung in vulkanisierten Gummiartikeln, bei dem Mischungen aus nicht selbsthärtenden Novolaken A und unverätherten oder teilverätherten Triazinharzen B als Kombination von Verstärkerharz und Härter hierfür in vulkanisierbaren Kautschukmischungen verwendet werden

## Beschreibung

Die Erfindung betrifft ein Verfahren zur Verminderung der Wärmeentwicklung in Gummiartikeln unter dynamischer Belastung.

Es ist bekannt, daß Phenolnovolake bzw. modifizierte Phenolnovolake gehärtet mit Hexamethylentetramin (HMT) bzw. dem hochverätherten Hexamethoxymethylmelamin (HMMM) eine gute Verstärkung im Vulkanisat ergeben. Insbesondere werden die Vulkanisathärte und die Spannungswerte, jeweils gemessen bei definierter Dehnung, deutlich erhöht. Die eingesetzten Melaminharzhärter (insbesondere HMMM) werden flüssig oder wie in der Gummiindustrie bevorzugt, auf festen Trägermaterialien (z.B. fein verteilter Kieselsäure oder Diatomeenerde) mit einem Massenanteil von ca. 65 bis 75 % Wirkstoff (hier HMMM) aufgezogen, als rieselfähige Pulver verarbeitet (siehe zum Beispiel "Phenolic Resins for Rubber Reinforcement"; E. Leicht und R. Sattelmeyer; Kautschuk + Gummi Kunststoffe 40. Jahrgang, Nr. 2/87; Seite 126).

Entsprechend dem Stand der Technik erhöhen Verstärkerharze im Vulkanisat jedoch nicht nur die Härte und die Spannungswerte, sondern sie beeinflussen in unerwünschter Weise auch das viskoelastische Verhalten der Vulkanisate derart, daß mechanische Arbeit vermehrt in Wärme umgewandelt und in dem Gummiartikel dissipiert wird. Diese Eigenschaft der Wärmeentwicklung und dadurch bedingt der Temperaturerhöhung bei dynamischer Belastung ("Heat Build-Up") ist für alle Gummiprodukte von Bedeutung, die beim Betrieb starken dynamischen Belastungen ausgesetzt sind, wie Teile von Automobilreifen. Nach dem Stand der Technik ist es nun so, daß diese unerwünschte Wärmeentwicklung um so stärker ausgeprägt ist, je besser das Harz seine Verstärkerwirkung entfaltet.

Aus der EP-A 0 013 330 ist bekannt, Kautschukmischungen in Gegenwart von Novolakharzen und reaktiven Melaminharzen erhältlich durch Umsetzung von Melamin mit 0,5 bis 6 mol Aldehyd pro 1 mol Melamin zu vulkanisieren. Die in den Melaminharzen vorhandenen Methylolgruppen können frei oder veräthert sein. Die Auswirkung des eingesetzten Melaminharzhärters auf die Wärmeentwicklung in dynamisch beanspruchten Gummiartikeln wurde nicht untersucht.

Aus technischer Sicht besteht daher ein großes Interesse an Verstärkerharz-Härtersystemen für Gummiartikel, die eine gute Verstärkerwirkung mit moderater Wärmeentwicklung bei dynamischer Belastung kombinieren.

Überraschenderweise wurde nun gefunden, daß durch Verwendung einer Kombination von Novolaken als Verstärkerharz mit unverätherten oder zumindest teilweise verätherten Umsetzungsprodukten von Formaldehyd und Triazinen eine gute Vulkanisatverstärkung kombiniert mit einer deutlich niedrigeren Wärmeentwicklung erhalten wird, verglichen mit dem gleichen Verstärkerharz und einem dem Stand der Technik entsprechenden hochverätherten Melaminharz wie HMMM (Hexamethoxymethylmelamin) oder einer anderen Formaldehydquelle als Härter. Es war nicht zu erwarten gewesen, daß diese Kombination von Verstärkerharzen und Härtern hierfür dazu verwendet werden kann, die Wärmeentwicklung in dynamisch beanspruchten Gummiartikeln zu vermindern.

Die Erfindung betrifft daher ein Verfahren zur Verminderung der Wärmeentwicklung bei dynamischer Beanspruchung in vulkanisierten Gummiartikeln, wobei Mischungen aus nicht selbsthärtenden Novolaken A als Verstärkerharze und unverätherten oder teilverätherten Triazinharzen B als Härter für diese Verstärkerharze eingesetzt werden. Die geeigneten Triazinharze sind gekennzeichnet durch ein Stoffmengenverhältnis F/T von Formaldehyd zu Triazin von 0,5 bis 5,5 mol/mol, bevorzugt 0,75 bis 5,25 mol/mol, und insbesondere 1,0 bis 5,0 mol/mol, die nicht oder zumindest teilweise veräthert sind, mit einem Verätherungsgrad von 0 bis 80 % bezogen auf den gebundenen Formaldehyd. Die zur Verätherung eingesetzten Alkohole sind ausgewählt aus linearen und verzweigten aliphatischen Alkoholen mit 1 bis 18 Kohlenstoffatomen.

Weiter betrifft die Erfindung Kombinationen von Novolaken A als Verstärkerharze in Kautschukmischungen und teilweise verätherten Triazinharzen B als Härter hierfür, wobei die Triazinharze Kondensationsprodukte von Formaldehyd und Triazinen ausgewählt aus Melamin, Acetoguanamin, Benzoguanamin und Caprinoguanamin sowie deren Mischungen sind, mit einem Stoffmengenverhältnis F/T von Formaldehyd zu Triazin von 0,5 bis 5,5 mol/mol, bevorzugt 0,75 bis 5,25 mol/mol, und besonders bevorzugt 1,0 bis 5,0 mol/mol, und einem Verhältnis A/T der Stoffmenge an Alkoxygruppen zur Stoffmenge des Triazins von (F/T - 1,75 mol/mol), jedoch mindestens 0,5 mol/mol, bevorzugt mindestens 0,75 mol/mol, und insbesondere mindestens 1 mol/mol, wobei A/T maximal gleich F/T ist, vorzugsweise maximal F/T · 0,9, und insbesondere maximal F/T · 0,8.

Bevorzugt wird als Triazin Melamin oder einen Mischung von Melamin mit einem der anderen genannten Triazine eingesetzt, wobei der Massenanteil dieser Triazine in der Triazinmischung maximal 15 %, bevorzugt maximal 10 % beträgt.

Die Erfindung betrifft ebenfalls die Verwendung dieser Kombinationen von Novolaken und Triazinharzen zur Verminderung des Wärmeaufbaus in dynamisch beanspruchten vulkanisierten Kautschukmischungen.

Das erfindungsgemäße Verfahren zur Verminderung der Wärmeentwicklung in vulkanisierten Kautschukartikeln kann bei den verschiedensten vulkanisierbaren Kautschukmischungen eingesetzt werden, die dadurch zu Gummiartikeln mit niedriger Wärmeentwicklung bei dynamischer Beanspruchung verarbeitet werden können. Als geeignete Kautschuktypen können insbesondere mit Schwefel vulkanisierbare Kautschuke wie z.B. Naturkautschuk (NR), Styrolbutadienkautschuk (SBR), Polyisoprenkautschuk (IR), Polybutadienkautschuk (BR), Nitrilkautschuk (NBR), Butylkautschuk (IIR), Äthylen-Propylen-Kautschuk (EPM), Äthylen-Propylen-Dien-Kautschuk (EPDM) oder deren Gemische, wie sie üblicherweise in der Reifenindustrie oder bei technischen Gummiwaren Verwendung finden, eingesetzt werden.

Übliche weitere Zusatzstoffe sind z.B. Füllstoffe wie Ruße, Kieselsäuren, Kreide, Kaoline. Ferner können als weitere Bestandteile Vulkanisationsmittel, Beschleuniger, Aktivatoren, Verarbeitungshilfsmittel, Alterungsschutzmittel und Weichmacher wie z.B. Mineralöle den Mischungen zugegeben werden.

Geeignete Verstärkerharze A sind nicht selbsthärtende Phenolharze wie Phenolnovolake oder Mehrkernphenole. Besonders geeignete Novolakharze sind z.B. solche aus Phenol und/oder mehrwertigen Ein- oder Mehrkernphenolen wie Resorcin oder Bisphenolen und/oder insbesondere aus mit einem Kohlenwasserstoffrest substituierten ein- oder mehrwertigen Phenolen, wie Alkyl- oder Aralkylphenolen mit zum Beispiel 1 bis 20, vorzugsweise 4 bis 18 C-Atomen im Substituenten, wie tert. Butylphenol, Octylphenol, die in Cashew-Nußschalenöl als Mischung enthaltenen Phenole Cardol und Cardanol, sowie styrolisierten Phenolen oder mit Fettsäuren, wie Leinölfettsäuren, modifiziertem Phenol oder Phenylphenol. Bevorzugt sind Umsetzungsprodukte von Phenolen mit Formaldehyd, wobei die Phenole einen Massenanteil von mindestens 10 % an Alkylphenolen enthalten, die mindestens eine Alkylgruppe in jedem phenolischen Ring enthalten, und wobei die Alkylgruppen 1 bis 20 Kohlenstoffatome aufweisen. Besonders bevorzugt sind Reaktionsprodukte von Mischungen aus Phenol und tert.-Butylphenol mit Formaldehyd.

Die Herstellung der Verstärkerharze durch Reaktion des Phenols oder des Gemisches von Phenolen mit den Aldehyden, wie Acetaldehyd, vorzugsweise aber Formaldehyd, erfolgt im sauren Medium gemäß dem Stand der Technik. Die Novolake können auch weichmachende Anteile, wie Polyäthylenglykole, Tallöl oder andere übliche Plastifiziermittel enthalten. Die Phenolharze können außerdem mit Naturharzen, wie Kolophonium oder Tallharz oder mit Terpenen modifiziert sein, wobei der Naturharzanteil in speziellen Fällen auch mengenmäßig überwiegen kann.

Bei den erfindungsgemäß eingesetzten Triazinharzen **B** handelt es sich um unverätherte und/oder teilweise verätherte Umsetzungsprodukte von Aminotriazinen mit Aldehyden, insbesondere Formaldehyd. Als Aminotriazin oder Triazin können neben Melamin auch Guanamine wie z.B. Acetoguanamin, Benzoguanamin und Caprinoguanamin eingesetzt werden. Der Verätherungsgrad ist das Verhältnis der Stoffmenge der verätherten Methylolgruppen zur Summe der Stoffmengen der verätherten und unverätherten Methylolgruppen in dem betreffenden Triazinharz. Als Verätherungsmittel können lineare oder verzweigte aliphatische Alkohole mit 1 bis 18, insbesondere 1 bis 4 Kohlenstoffatomen eingesetzt werden, insbesondere Methanol, Äthanol, n- und iso-Propanol, sowie n-, iso-, sek.- und tert.-Butanol. Bevorzugt sind die Harze **B** mit Methanol oder Isobutanol, besonders bevorzugt mit Methanol veräthert. Es ist weiter bevorzugt, daß das zur Herstellung des Harzes **B** eingesetzte Triazin Melamin oder eine Mischung von Melamin mit anderen Triazinen ist, wobei der Massenanteil von Melamin in der Triazinmischung mindestens 50 %, bevorzugt mindestens 65 %, insbesondere mindestens 85 % beträgt.

Bevorzugt sind Triazinharze **B** mit einem Stoffmengenverhältnis F/T von 0,5 mol/mol bis 5,5 mol/mol, bevorzugt 1,0 bis 5,0 mol/mol, und besonders bevorzugt 1,5 bis 4,5 mol/mol, von gebundenem Formaldehyd (in Form von N-Methylolgruppen) pro 1 mol Triazin, in denen allein Melamin als Triazin eingesetzt ist, und mit einem Verhältnis A/T der Stoffmenge an Alkoxygruppen zur Stoffmenge des Triazins, das von (F/T - 1,75 mol/mol), mindestens aber 0,5 mol/mol bis zu F/T betragen kann, bevorzugt aber nicht mehr als 0,9 · F/T, und besonders bevorzugt nicht mehr als 0,8 · F/T beträgt.

Die erhaltenen wäßrigen Harzlösungen lassen sich durch Sprühtrocknung in Pulverform gewinnen [Kunststoffhandbuch Band 10 Duroplaste, Herausg. W. Woebcken, Hanser-Verlag, 2. Aufl. 1988, S.48; Ullmann's Encyclopedia of Industrial Chemistry, Vol. A2, Ed. W. Gerhartz, 5. Aufl. 1985, S. 116 bis 141]. Die Harzlösungen können auch auf feinteilige Kieselsäure-Pulver als Träger aufgezogen und anschließend getrocknet werden.

Das Verhältnis der Masse von Verstärkerharz **A** zur Masse des Härters **B** beträgt bevorzugt 1 : 2 bis 5:1.

Die vulkanisierbaren Kautschukmischungen werden nach bekannten Methoden hergestellt. Sie werden z.B. in Innenmischern oder auf Mischwalzen hergestellt. Zur besseren Verteilung der Verstärkerharze ist es günstig, die Mischungstemperatur während des Mischvorganges über den Schmelzbereich des Verstärkerharzes zu erhöhen. Es muß jedoch darauf geachtet werden, daß der Härter zur Vermeidung einer vorzeitigen Reaktion mit dem vernetzbaren Verstärkerharz erst in der zweiten Mischstufe zusammen mit dem Schwefel und den Beschleunigern bei nicht zu hohen Temperaturen (insbesondere bevorzugt bei 70 bis 120 °C) eingearbeitet wird.

Die restlichen Bestandteile, d. i. der Kautschuk-Anteil und alle Zusatzstoffe mit Ausnahme von Triazinharz **B** sowie den gegebenenfalls eingesetzten Beschleunigern und Schwefel, werden in der ersten Mischstufe bei Temperaturen von 100 bis 170 °C in Innenmischern oder auf üblichen heizbaren Mischwalzen gemischt.

Die erfindungsgemäßen Vulkanisate können z.B. als technische Gummiwaren, wie Dämpfungselemente, Gummimanschetten, Bälge, Förderbänder, Schläuche, Keilriemen und insbesondere in Fahrzeugreifen verwendet werden.

Der Einsatz der erfindungsgemäßen Mischungen kann auch in Schichten erfolgen, die eine gute Haftung zu eingelegten Festigkeitsträgern wie Geweben oder Geflechten haben müssen. Zur Verbesserung der Haftung können zusätzlich Haftvermittler zugesetzt werden.

Der Massenanteil der erfindungsgemäßen Mischungen aus Verstärkerharz und unverätherten oder teilverätherten Triazinharzen in den vulkanisierbaren Kautschukmischungen kann vorzugsweise 1 bis 20 %, insbesondere 2 zu 15 %, besonders bevorzugt 2,5 bis 10 % betragen, bezogen auf die Masse der vulkanisierbaren Kautschukmischung.

Die Erfindung wird durch die nachstehenden Beispiele näher erläutert. Unter "Kieselsäure" wird in den Beispielen fein verteiltes gefälltes Siliciumdioxid verstanden.

### Beispiele

### Verstärkerharze:

### Phenolharz A:

Handelsübliches nichtselbsthärtendes alkylphenolmodifiziertes Verstärkerharz (®Alnovol PN 160 der Solutia Germany GmbH & Co. KG) mit einem Schmelzbereich von 71 bis 81 °C, und einer Viskosität (gemessen an einer 50 %igen Lösung in Methoxypropanol nach DIN 53177 bei 23 °C) von 700 bis 1100 mPa·s

### Phenolharz B:

Handelsübliches nichtselbsthärtendes alkylphenolmodifiziertes Verstärkerharz (® AlnovolPN 166 der Solutia Germany GmbH & Co. KG) mit einem Schmelzbereich von 65 bis 75 °C und einer Viskosität (gemessen an einer 50 %igen Lösung in Methoxypropanol nach DIN 53177 bei 23 °C) von 350 bis 750 mPa·s

### Melaminharzhärter:

Melaminharz A: unveräthertes reines Melamin-Formaldehyd-Harz mit einem Stoffmengenverhältnis von 1,6 mol gebundenem Formaldehyd pro 1 mol Melamin, aufgezogen auf Kieselsäure (® Perkasil SM 408, Weber & Schaer, Hamburg) mit einem Wirkstoffgehalt von 60%
Melaminharz B: unveräthertes reines Melamin-Formaldehyd-Harz mit einem Stoffmengenverhältnis von 4 mol gebundenem Formaldehyd pro 1 mol Melamin, aufgezogen auf Kieselsäure (® Perkasil SM 408, Weber & Schaer, Hamburg) mit einem Wirkstoffgehalt von 60 %
Melaminharz C: mit Methanol teilveräthertes Melamin-Formaldehyd-Harz mit einem Stoffmengenverhältnis von 2,2 mol gebundenem Formaldehyd und 1,3 mol gebundenem Methanol pro 1 mol Melamin, aufgezogen auf Kieselsäure (®Perkasil SM 408, Weber & Schaer, Hamburg) mit einem Wirkstoffgehalt von 65 %
Melaminharz D: mit Methanol teilveräthertes Melamin-Formaldehyd-Harz mit einem Stoffmengenverhältnis von 3,8 mol gebundenem Formaldehyd und 2,2 mol gebundenem Methanol pro 1 mol Melamin, aufgezogen auf Kieselsäure (® Perkasil SM 408, Weber & Schaer, Hamburg) mit einem Wirkstoffgehalt von 65 %
Melaminharz E: mit Methanol teilveräthertes Melamin-Formaldehyd-Harz mit einem Stoffmengenverhältnis von 3,2 mol gebundenem Formaldehyd und 1,6 mol gebundenem Methanol pro 1 mol Melamin, aufgezogen auf Kieselsäure (® Perkasil SM 408, Weber & Schaer, Hamburg) mit einem Wirkstoffgehalt von 65 %
Melaminharz F: sprühgetrocknetes unveräthertes reines Melamin-Formaldehyd-Harz mit einem Stoffmengenverhältnis von 1,6 mol gebundenem Formaldehyd pro mol Melamin
HMMM: Handelsübliches auf Kieselsäure aufgezogenes Hexamethoxymethylmelamin (HMMM) (® Additol XT 922 der Solutia Germany GmbH & Co. KG)

### Gummitechnische Prüfung

Der Wärmeaufbau der Vulkanisate wurde im Rollbiegetest mit einer Abwinkelung von 25° nach jeweils 10 000 und 20 000 Umdrehungen gemessen.
Als Prüfkörper wurden vulkanisierte Gummizylinder von 100 mm Länge und 20 mm Durchmesser eingesetzt. Zweck der dynamischen Prüfung war es, dien Wärmeentwicklung (Heat Build Up) des abgewinkelt rotierenden Prüfkörpers nach jeweils 10 000 und 20 000 Umdrehungen zu messen.

Die Prüfvorrichtung besteht aus einem Elektromotor mit Spannfutter und einem abwinkelbaren Gegenlager. Die Messung der Temperaturerhöhung wird mit einem Temperaturfühler vorgenommen, der zu diesem Zweck (in halber Entfernung zwischen Spannfutter und Gegenlager) in den Gummistab eingestochen wird.

Tabelle 1 zeigt die Zusammensetzung der nach Ausvulkanisation geprüften Kautschukmischungen. Zu dieser Grundzusammensetzung werden jeweils Verstärkerharze und Härter hierfür zugemischt.

**Tabelle 1:**

| Prüfrezepturen (Grundzusammensetzung) | |
|---|---|
| Bestandteil | Masse in g |
| Naturkautschuk | 100 |
| ® Renacit 11 (Mastiziermittel) | 0,2 |
| Ruß N 326 | 70 |
| Zinkoxid RS | 5 |
| Stearinsäure | 1,5 |
| Alterungsschutzmittel | 2 |
| Schwefel | 2,5 |
| ®Vulkacit CZ (CBS) (Beschleuniger) | 1,2 |

In den nachfolgenden Tabellen wird die unterschiedliche Wärmeentwicklung von vulkanisierten Gummiteilen in Abhängigkeit vom eingesetzten Verstärkerharz bzw. von der eingesetzten Formaldehydquelle deutlich. Dabei werden zu der in Tabelle 1 definierten Grund-Zusammensetzung (jeweils 182,4 g) jeweils unterschiedliche Arten und Massen der betreffenden Phenol- bzw. Melaminharze zugesetzt.

Tabelle 2 zeigt den Einfluß der zur Grundzusammensetzung zugefügten Verstärkerharze und Härter auf die mechanischen Eigenschaften und den Wärmeaufbau der Vulkanisate. Als Verstärkerharze wurden Phenolharz A bzw. Phenolharz B eingesetzt, wobei als Härter für die Phenolharze die unverätherten Melaminharzhärter B bzw. F im Vergleich gegen den Stand der Technik mit HMMM (=Hexamethoxymethylmelamin)verwendet wurden.

**Tabelle 2**

| **Mischung** | | 1 | 2 | 3 | 4 | 5 | 6 |
|---|---|---|---|---|---|---|---|
| **Verstärkerharz** | | | (Vergleich) | | (Vergleich) | | |
| Phenolharz A | g | 7 | 7 | - | - | 7 | - |
| Phenolharz B | g | - | - | 7 | 7 | - | 7 |
| | | | | | | | |

| **Härter** | | | | | | | |
|---|---|---|---|---|---|---|---|
| Melaminharz B | g | 5 | - | 5 | - | - | - |
| HMMM | g | - | 4,6 | - | 4,6 | - | - |
| Melaminharz F | g | | | | | 3 | 3 |
| | | | | | | | |

| **Vulkanisation** bei 145 °C | min | 30 | 45 | 30 | 45 | 30 | 30 |
|---|---|---|---|---|---|---|---|
| t ₅ | min | 2,3 | 4,8 | 2,8 | 4,2 | 2,1 | 2,5 |
| t₉₀ | min | 19,1 | 37,1 | 19,5 | 37,5 | 18,9 | 19,3 |
| | | | | | | | |

| **Mechanische Eigenschaften**: | | | | | | | |
|---|---|---|---|---|---|---|---|
| Zugspannung bei 10 % | MPa | 4,5 | 5,3 | 4,5 | 4,8 | 4,6 | 4,5 |
| Zugspannung bei 100 % | MPa | 9,8 | 10,2 | 9,9 | 9,6 | 9,7 | 9,8 |
| | | | | | | | |
| Härte Shore A bei 23 °C | | 94 | 96 | 94 | 96 | 93 | 94 |
| Härte Shore A bei 70 °C | | 91 | 93 | 88 | 93 | 91 | 90 |
| | | | | | | | |
| Wärmeentwicklungnach 10 000 U | °C | 109 | 149 | 106 | 137 | 108 | 104 |
| Wärmeentwicklungnach 20 000 U | °C | 110 | 160^{(*)} | 107 | 150 | 110 | 107 |
| * Probekörper geplatzt | | | | | | | |
| U = Umdrehungen | | | | | | | |

Wie aus Tabelle 2 ersichtlich ist, zeigen die Vulkanisate aus den erfindungsgemäßen Mischungen 1, 3, 5 und 6 jeweils eine deutlich geringere Wärmeentwicklung im Vergleich zu den Mischungen 2 und 4 gemäß dem Stand der Technik. Während bei den Standardmischungen 2 und 4 zwischen 10 000 und 20 000 Umdrehungen nochmals ein Temperaturanstieg von 11 bzw. 13 °C erfolgt (Mischung 2: 149 °C auf 160 °C; Mischung 4: 137 °C auf 150 °C), beträgt dieser bei den erfindungsgemäßen Mischungen 1 und 3 lediglich noch 1 °C (Mischung 1: 109 °C auf 110 °C; Mischung 3: 106 °C auf 107 °C).

Wie aus Tabelle 2 weiterhin zu erkennen ist, sind die t₅ und t₉₀ -Werte (gemessen nach DIN 53 529 in einem üblichen Monsanto-Vulkameter) der erfindungsgemäßen Mischungen 1,3,5 und 6 deutlich geringer als diejenigen der Standardmischungen 2 und 4.

Die daraus resultierenden kürzeren Vulkanisationszeiten erlauben eine Einsparung an Energiekosten und führen zu kürzeren Zykluszeiten, dies wiederum bedeutet eine Erhöhung der Produktivität.

Tabelle 3 zeigt die mechanischen Eigenschaften und die Wärmeentwicklung von vulkanisierten Gummiteilen, verstärkt mit Phenolharz A in Kombination mit den unverätherten und verätherten Melaminharzhärtern Melaminharz A bis Melaminharz E (die Harze A und B sind unveräthert; C bis E sind teilveräthert) als Härter im Vergleich gegen den Stand der Technik mit HMMM (=Hexamethoxymethylmelamin) als Härter.

**Tabelle 3**

| **Mischung** | | **7** | **8** | **9** | **10** | **11** | **12** (Vergleich) |
|---|---|---|---|---|---|---|---|
| **Verstärkerharz:** | | | | | | | |
| Phenolharz A | g | 7,00 | 7,00 | 7,00 | 7,00 | 7,00 | 7,00 |
| | | | | | | | |

| **Härter:** | | | | | | | |
|---|---|---|---|---|---|---|---|
| Melaminharz A | g | 5,00 | | | | | |
| Melaminharz B | g | | 5,00 | | | | |
| Melaminharz C | g | | | 4,62 | | | |
| Melaminharz D | g | | | | 4,62 | | |
| Melaminharz E | g | | | | | 4,62 | |
| HMMM | g | | | | | | 4,62 |
| | | | | | | | |
| **Vulkanisation** bei 145 °C | min | 20 | 30 | 15 | 15 | 15 | 45 |
| t₅ | min | 3,4 | 2,3 | 3,4 | 3,4 | 3,9 | 4,8 |
| t₉₀ | min | 15,7 | 19,1 | 10,9 | 12,4 | 11,7 | 37,1 |
| | | | | | | | |

| **Mechanische Eigenschaften** | | | | | | | |
|---|---|---|---|---|---|---|---|
| Zugspannung bei 10 % | MPa | 3,5 | 4,5 | 3,1 | 3,2 | 3,1 | 5,3 |
| Zugspannung bei 100 % | MPa | 8,9 | 9,8 | 8,2 | 8,4 | 8,5 | 10,2 |
| | | | | | | | |
| Härte Shore A bei 23 °C | | 93 | 94 | 92 | 93 | 92 | 96 |
| Härte Shore A bei 70 °C | | 87 | 91 | 80 | 83 | 82 | 93 |
| | | | | | | | |
| Wärmeentwicklung nach 10000 U | °C | 94 | 109 | 83 | 92 | 86 | 149 |
| Wärmeentwicklung nach 20000 U | °C | 98 | 110 | 85 | 97 | 88 | 160 |

Beispiel 8 zeigt eine moderate Wärmeentwicklung bei gleichzeitig geringem Verlust an Härte bei Erwärmung (Abfall der Shore A-Härte lediglich um 3 von 94 auf 91, während der Härteverlust bei den anderen Formulierung deutlich höher ist). Der Vergleich (12) hat einen ähnlich niedrigen Härteverlust bei Erwärmung von 23 auf 70 °C, zeigt jedoch einen deutlich höheren Wärmeaufbau.
Die niedrigste Wärmeentwicklung zeigen die Beispiele 9, 10 und 11. In diesen Fällen entspricht das verwendete Melaminharz (C, D und E) den Bedingungen für F/T und A/T: die Werte sind 2,2 und 1,3 für C; 3,8 und 2,2 für D; und 3,2 und 1,6 für E; F/T liegt also zwischen 0,5 und 5,5 mol/mol, und A/T ist größer als (F/T -1,75 mol/mol) bzw. 0,5 mol/mol, jedoch nicht größer als F/T.

## Patentansprüche

1. Verfahren zur Verminderung der Wärmeentwicklung bei dynamischer Beanspruchung in vulkanisierten Gummiartikeln, **dadurch gekennzeichnet, daß** Mischungen aus nicht selbsthärtenden Novolaken **A** und unverätherten oder mit Alkoholen ausgewählt aus linearen und verzweigten aliphatischen Alkoholen mit 1 bis 18 Kohlenstoffatomen zumindest teilverätherten Triazinharzen **B** mit einem Stoffmengenverhältnis von Formaldehyd zu Triazin von 0,5 bis 5,5 mol/mol als Kombination von Verstärkerharz und Härter hierfür in vulkanisierbaren Kautschukmischungen eingesetzt werden.

2. Verfahren nach Anspruch 1, **dadurch gekennzeichnet, daß** die zur Herstellung des Triazinharzes **B** eingesetzten Triazine mindestens einen Massenanteil von 50 % an Melamin enthalten.

3. Verfahren nach Anspruch 1, **dadurch gekennzeichnet, daß** die Triazinharze **B** mit Methanol veräthert sind.

4. Verfahren nach Anspruch 1, **dadurch gekennzeichnet, daß** als Novolake **A** Reaktionsprodukte von Phenolen mit Formaldehyd eingesetzt werden, wobei die Phenole mindestens einen Massenanteil von 10 % an Alkylphenolen mit mindestens einer Alkylgruppe pro Phenolring und einem Alkylrest von 1 bis 20 Kohlenstoffatomen enthalten.

5. Verfahren nach Anspruch 1, **dadurch gekennzeichnet, daß** als Novolake **A** Reaktionsprodukte von Mischungen von Phenol und tert.-Butylphenol mit Formaldehyd eingesetzt werden.

6. Verfahren nach Anspruch 1, **dadurch gekennzeichnet, daß** das Verhältnis der Masse des Novolaks A zur Masse des Triazinharzes **B** 1:2 bis 5:1 beträgt.

7. Verfahren nach Anspruch 1, **dadurch gekennzeichnet, daß** der Massenanteil der Mischung aus Novolak **A** und Triazinharz **B** in der vulkanisierbaren Kautschukmischung 1 bis 20 % beträgt.

8. Verfahren nach Anspruch 1, **dadurch gekennzeichnet, daß** die Triazinharze **B** auf fein verteiltem Siliciumdioxid adsorbiert sind.

9. Verfahren nach Anspruch 1, **dadurch gekennzeichnet, daß** die Vermischung in zwei Stufen durchgeführt wird, wobei in der ersten Stufe alle Komponenten der Kautschukmischung mit Ausnahme der Triazinharze **B**, der Beschleuniger und des Schwefels bei Temperaturen von 100 bis 170 °C vermischt werden, und in der zweiten Stufe die Triazinharze B zusammen mit Schwefel und gegebenenfalls Beschleunigern bei 70 bis 120 °C zugefügt und bei dieser Temperatur vermischt werden.

10. Verfahren nach Anspruch 9, **dadurch gekennzeichnet, daß** die Temperatur in der ersten Mischstufe bis zum Schmelzbereich des Verstärkerharzes **A** erhöht wird.

11. Mischung aus Novolaken **A** und teilweise verätherten Triazinharzen **B** als Verstärkerharz in Kautschukmischungen und Härter hierfür, **dadurch gekennzeichnet, daß** die Triazinharze **B** Kondensationsprodukte aus Formaldehyd und Triazinen ausgewählt aus der Gruppe Melamin, Acetoguanamin, Caprinoguanamin und Benzoguanamin sowie deren Mischungen sind, wobei das Verhältnis F/T der Stoffmenge des Formaldehyds zur Stoffmenge des Triazins in **B** 0,5 bis 5,5 mol/mol beträgt, und das Verhältnis A/T der Stoffmenge der Alkoxygruppen zur Stoffmenge der Triazingruppen in **B** zwischen (F/T - 1,75 mol/mol), jedoch mindestens 0,5 mol/mol, und F/T liegt.

12. Mischung gemäß Anspruch 11, **dadurch gekennzeichnet, daß** Melamin als Triazin gewählt ist.

13. Mischung gemäß Anspruch 11, **dadurch gekennzeichnet, daß** das Verhältnis F/T 1 bis 5 mol/mol beträgt.

14. Mischung gemäß Anspruch 11, **dadurch gekennzeichnet, daß** das Verhältnis A/T von (F/T - 1,75 mol/mol), jedoch mindestens 1,0 mol/mol, bis 0,9 · F/T beträgt.

15. Mischung gemäß Anspruch 11, **dadurch gekennzeichnet, daß** das Triazinharz mit Methanol veräthert ist.

16. Verfahren zur Verminderung der Wärmeentwicklung bei dynamischer Beanspruchung in vulkanisierten Gummiartikeln, umfassend die Zumischung einer Mischung gemäß Anspruch 11 zu einer vulkanisierbaren Kautschukmischung.

17. Verfahren nach Anspruch 16, wobei die Zumischung bei einer Temperatur von 70 bis 120 °C vorgenommen wird.
